# DEMANDE DE BREVET EUROPEEN

(11) **EP 3 471 024 A1**
(43) Date de publication de la demande: **17.04.2019**
(21) Numéro de dépôt: 17306377.7
(22) Date de dépôt: 11.10.2017
(51) Int. Cl.: G06K 19/077, G06K 19/073

(54) **CARTE A PUCE AVEC MODULE ÉLECTRONIQUE SÉCURISÉ ET PROCÉDÉ DE FABRICATION**

(71) Demandeur: GEMALTO SA, 92190 Meudon (FR)
(72) Inventeur: DEGEILH, Line, 92190 Meudon (FR); JANVRIN, Rémy, 92190 Meudon (FR); DOSSETTO, Lucile, 92190 Meudon (FR); OTTOBON, Stéphane, 92190 Meudon (FR)
(74) Mandataire: Lotaut, Yacine Diaw

(57) **Abrégé**

L'invention concerne une carte à puce (100) comportant :
- un corps de carte (120) comportant une cavité et une face avant munie d'un premier motif imprimé (123), et
- un module électronique (110) logé dans la cavité du corps de carte et comportant un support diélectrique (116) équipé, sur une première face, d'une puce électronique et, sur une seconde face, d'une zone de contacts électriques (117),
dans lequel le support diélectrique (116) est formé dans un matériau au moins partiellement transparent et recouvre en partie le premier motif imprimé (123) du corps de carte, de sorte qu'une partie dudit premier motif imprimé est visible par transparence à travers le support diélectrique.

## Description

### DOMAINE TECHNIQUE

La présente invention concerne une carte à puce dont le module électronique est sécurisé avec le corps de carte. Elle concerne également un procédé de fabrication d'une telle carte à puce. L'invention trouve des applications dans les domaines techniques utilisant des cartes à puces dont le module électronique est sécurisé, comme par exemple, le domaine bancaire et le domaine de la sécurité.

### ETAT DE LA TECHNIQUE

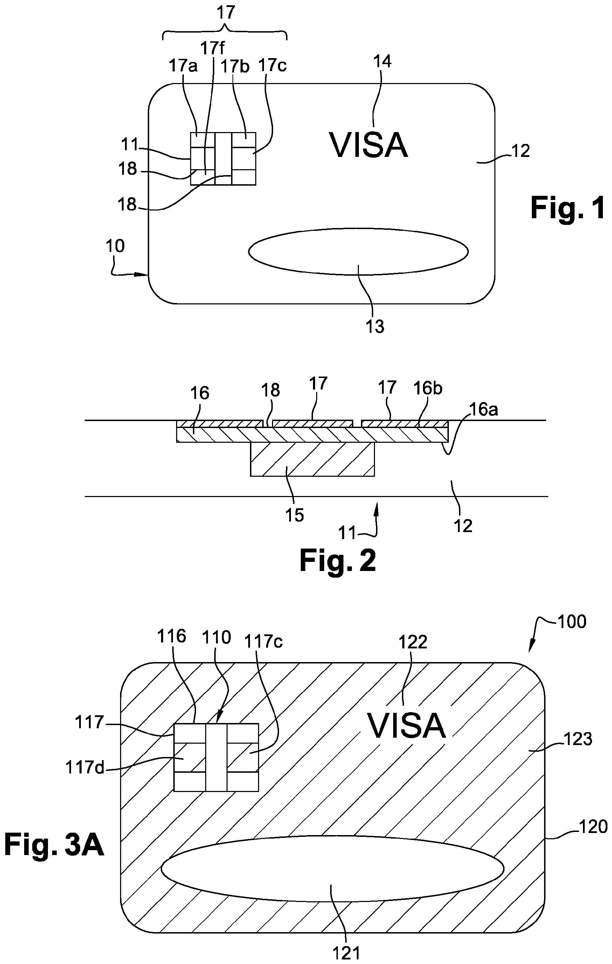

De façon connue en soi, les cartes à puce (ou « smart card » en termes anglosaxons) comportent généralement un corps de carte en forme de parallélépipède rectangle et un module électronique logé dans le corps de carte. La figure 1 représente un exemple d'une carte à puce classique 10 comportant un module électronique 11 logé dans un corps de carte 12.

Le corps de carte 12, généralement en matière plastique, présente des dimensions plus ou moins standardisées de quelques centimètres de longueur et de largeur et de quelques millimètres d'épaisseur. Le corps de carte 12 comporte généralement, au moins sur sa face avant, des données alphanumériques 13 relatives au détenteur de la carte ou à l'émetteur de la carte. Généralement, cette face avant comporte également des impressions 14, telles que des logos, des photographies ou autres images, qui peuvent être personnalisées par le fabriquant en fonction notamment des choix du détenteur et/ou de l'émetteur.

Le module électronique 11 est prévu pour contenir des données relatives au détenteur. Ces données peuvent être, par exemple, des données bancaires lorsque la carte à puce est une carte bancaire, des données personnelles lorsque la carte à puce est une carte d'identification, etc. Pour cela, comme représenté sur la figure 2, le module électronique 11 comporte un circuit intégré 15, appelé puce électronique ou simplement puce, apte à mémoriser des données et, dans des variantes munies d'un microprocesseur, à traiter ces données. Le module électronique 11 comporte en outre un support diélectrique 16 dont une première face 16a - appelée aussi sous-face - supporte la puce 15 et dont une seconde face 16b - appelée aussi surface - supporte une zone de contacts électriques 17. La zone de contacts électriques 17 est formée d'une métallisation en métal pur, comme par exemple de l'or, déposée sur la face 16b du support diélectrique 16. La zone de contacts électriques 17 comporte plusieurs contacts électriques - par exemple les contacts 17a - 17f sur la figure 1 - séparés les uns des autres par des chemins diélectriques 18. Le support diélectrique 16 doit donc supporter à la fois la puce 15 et la zone de contacts électriques 17 tout en assurant une isolation électrique entre ladite puce et lesdits contacts. Pour cela, il est connu de fabriquer le support diélectrique dans une plaque d'un matériau opaque, de préférence noir, comme par exemple un tissu de verre imprégné de résine Epoxy pigmenté ou chargé, un PET (PolyTéréphtalate d'Éthylène) ou un PEN (PolyNaphtalate d'Éthylène) coloré ou encore un Polyimide coloré. Cette opacité est à l'origine des chemins 18 visibles sur le module électronique et séparant les différents contacts électriques 17a-17f. Ces chemins 18 entre les contacts électriques permettent de créer des motifs plus ou moins géométriques et/ou irréguliers sur la surface visible du module électronique.

Dans le domaine de l'électronique, ces mêmes matériaux diélectriques (verre Epoxy, Polyimides, PEN, PET), dans leur version transparente, sont connus même s'ils ne sont pas ou peu utilisés dans cette version transparente. Ces matériaux présentent, en plus de leur propriété isolante, des caractéristiques de résistance thermique et/ou mécanique qui pourraient être intéressantes dans le domaine des cartes à puce. Toutefois, ces matériaux sont transparents et, à moins de pouvoir être rendus chimiquement opaques, sont considérés comme inadaptés à la fabrication des modules électroniques pour cartes à puce.

Par ailleurs, pour éviter les fraudes et les falsifications, il est connu de sécuriser les cartes à puce. Différents moyens de sécurisation sont utilisés sur les cartes à puces en circulation comme, par exemple, des données écrites en relief, des cryptogrammes, des hologrammes, etc. Toutefois, malgré ces moyens de sécurisation, des falsifications existent encore qui peuvent avoir des conséquences fâcheuses pour leur détenteur. Il existe donc un réel besoin de nouveaux moyens de sécurisation des cartes à puce.

### RESUME DE L'INVENTION

Pour répondre au problème évoqué ci-dessus des falsifications des cartes à puce, le demandeur propose une carte à puce dans laquelle le support diélectrique est transparent et laisse apparaitre l'impression sur le corps de carte de sorte à sécuriser le module électronique avec le corps de carte. Tout échange du module électronique ou du corps de carte est alors visible à l'oeil nu.

Selon un premier aspect, l'invention concerne une carte à puce comportant :
- un corps de carte comportant une cavité et une face avant munie d'un premier motif imprimé, et
- un module électronique logé dans la cavité du corps de carte et comportant un support diélectrique équipé, sur une première face, d'une puce électronique et, sur une seconde face, d'une zone de contacts électriques.

Cette carte à puce se caractérise par le fait que le support diélectrique est formé dans un matériau au moins partiellement transparent et recouvre en partie le premier motif imprimé du corps de carte, de sorte qu'une partie dudit premier motif imprimé est visible par transparence à travers le support diélectrique.

Une telle carte à puce offre, lors d'un contrôle de la carte à puce, un élément de sécurité qui s'ajoute aux éléments de sécurité classiques.

Avantageusement, le support diélectrique présente une superficie supérieure à la superficie de la zone de contacts électriques de sorte qu'une bordure transparente du support diélectrique recouvre une partie du premier motif imprimé. Les dimensions de la bordure transparente peuvent ainsi être adaptées à la dimension du second motif.

Avantageusement, la seconde face du support diélectrique comporte, au sein de la zone de contacts électriques, des zones transparentes aptes à laisser le premier motif imprimé apparaitre par transparence. Les zones transparentes remplacent donc des zones métallisées inutilisées, destinées à potentiellement former un contact électrique, ce qui permet une diminution de la quantité de métal nécessaire à la zone de contacts électriques.

De façon avantageuse, la carte à puce comporte au moins un second motif divisé en deux parties, une première partie étant contenue dans le module électronique, une deuxième partie étant imprimée sur le corps de carte. La carte à puce offre alors un nouvel élément de sécurité réparti sur les deux éléments physiques de la carte à puce (module et corps de carte).

Selon un ou plusieurs modes de réalisation, le second motif comporte une première et une deuxième parties strictement identiques ou une première et une deuxième parties complémentaires.

Selon un ou plusieurs modes de réalisation, la première partie du second motif est inscrite sur le support diélectrique de sorte que l'appariement du module électronique et du corps de carte forme ledit second motif.

Selon un ou plusieurs modes de réalisation, la première partie du second motif est mémorisée dans la puce électronique, pour un contrôle par lecture de ladite carte à puce.

Selon un ou plusieurs modes de réalisation, le matériau dans lequel est formé le support diélectrique est un matériau transparent ou translucide, sur une base Epoxy, PolyTéréphtalate d'Éthylène (PET), PolyNaphtalate d'Éthylène (PEN), Polyimide (PI) ou Polyétherimide (PEI). Le matériau peut être chargé, pigmenté ou teinté, dans une proportion telle qu'il garde une propriété de transparence.

Selon un second aspect, l'invention concerne un procédé de fabrication d'une carte à puce telle que définie précédemment. Ce procédé comporte une opération de fabrication du corps de carte, une opération de fabrication du module électronique et une opération d'assemblage du module électronique sur le corps de carte.

De façon avantageuse, plusieurs modules électroniques étant fabriqués en bande continue, la première partie du second motif est inscrite sur le support diélectrique de chaque module électronique avant découpe dudit module électronique.

Selon un ou plusieurs modes de réalisation, le second motif est spécifique à chaque carte à puce.

Selon un ou plusieurs modes de réalisation, le second motif est répétitif, la même première partie du second motif étant inscrite de façon répétitive sur tous les N modules électroniques de la bande, avec N ≠ 0.

### BREVE DESCRIPTION DES FIGURES

D'autres avantages et caractéristiques de l'invention apparaîtront à la lecture de la description, illustrée par les figures dans lesquelles :
- La figure 1, déjà décrite, représente une vue de dessus d'une carte à puce classique ;
- La figure 2, déjà décrite, représente une vue en coupe d'un module électronique classique inséré dans un corps de carte ;
- Les figures 3A-3B représentent, vu de dessus, deux exemples d'une carte à puce selon l'invention ;
- Les figures 4 et 5 représentent des vues de dessus d'autres exemples de carte à puce selon l'invention ;
- La figure 6 représente un diagramme fonctionnel d'un exemple de procédé de fabrication de la carte à puce ; et
- La figure 7 représente schématiquement une bande de plusieurs modules électroniques fabriqués selon le procédé de l'invention.

### DESCRIPTION DETAILLEE D'AU MOINS UN MODE DE REALISATION

Un exemple de réalisation d'une carte à puce comportant un support diélectrique transparent est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

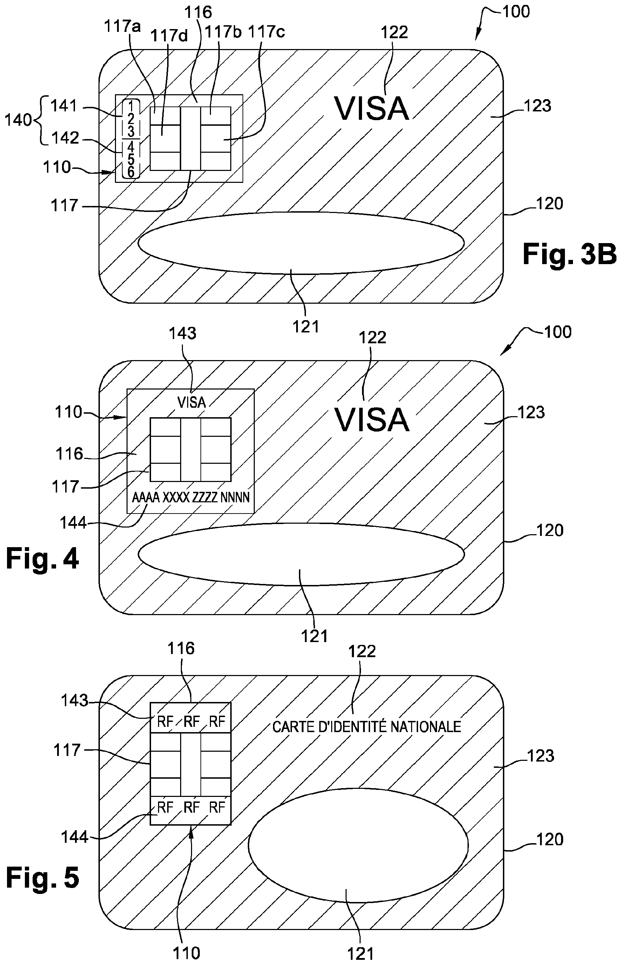

Les figures 3A et 3B représentent deux exemples d'une carte à puce selon l'invention, vue de dessus. Cette carte à puce 100 comporte un corps de carte 120 ainsi qu'un module électronique 110 logé, de façon classique, dans une cavité du corps de carte 120. De façon classique également, le corps de carte 120 peut comporter des éléments de sécurité tels que des données alphanumériques 121, par exemple en relief, et une ou plusieurs impressions 122, 130. Dans l'exemple de la figure 1, les impressions du corps de carte 120 sont, en particulier, un logo 122 et un premier motif imprimé 123. Selon l'invention, ce premier motif imprimé 123 peut recouvrir la face avant du corps de carte 120 en totalité ou seulement partiellement, dès lors qu'il recouvre au moins la portion de la face avant située autour de la puce (non visible sur la figure) et/ou du module électronique 110.

Selon l'invention, le module électronique 110 comporte :
- un support diélectrique 116 sous la forme d'une plaquette sensiblement parallélépipédique,
- une zone de contacts électriques 117 recouvrant partiellement une première face du support diélectrique 116, et
- une puce électronique fixée sur la seconde face du support diélectrique et logée dans la cavité du corps de carte.

Ce support diélectrique 116 est constitué dans un matériau diélectrique transparent tel qu'un verre Epoxy, un Polyimide, un PEN (PolyNaphtalate d'Éthylène), un PET (PolyTéréphtalate d'Éthylène), ou tout autre matériau diélectrique transparent à la lumière et utilisable comme support de module électronique. Le fait que le support diélectrique 116 soit transparent à la lumière a pour effet de permettre la visualisation, par transparence, du premier motif imprimé 123 sous le support diélectrique 116. Ainsi, tout contrôleur ou toute personne souhaitant contrôler la carte à puce peut vérifier à l'oeil nu que le motif imprimé 123 s'étend bien jusque sous le module électronique 110 et, par conséquent, qu'il correspond bien au motif imprimé d'origine. En effet, en cas de falsification du motif imprimé - par exemple par impression d'un faux motif au-dessus du motif d'origine - la partie du motif située sous le support diélectrique 116 ne coïnciderait pas avec le motif imprimé couvrant le reste du corps de carte.

Dans le domaine des cartes à puce, il est habituel, pour des raisons de coût et d'esthétisme, de fabriquer des supports diélectriques dont la surface - à savoir la seconde face du support diélectrique - est presque entièrement recouverte par la zone de contacts électriques. Autrement dit, la superficie du support diélectrique est généralement approximativement égale à la superficie de la zone de contacts électriques 117. Toutefois, il est fréquent que tous les contacts électriques d'un module électronique ne soient pas utilisés. Certaines des zones métallisées pour former les contacts électriques ne sont alors pas connectées.

Il est alors proposé, dans certains modes de réalisation de l'invention, de ne pas métalliser ces zones non utilisées du support diélectrique afin qu'elles restent transparentes à la lumière. En particulier, dans l'exemple de la figure 3A, les zones 117c et 117d de la zone de contacts électriques 117 ne sont pas métallisées. Elles permettent ainsi une visualisation, par transparence, du premier motif imprimé 123. Le contrôle de la carte à puce peut alors être réalisé visuellement en comparant le motif imprimé apparaissant dans les zones transparentes 117c, 117d avec le motif imprimé sur le corps de carte 120. Ces modes de réalisation ont l'avantage, outre d'apporter un élément de sécurité supplémentaire, de conserver les dimensions standard des modules électroniques tout en limitant la quantité de métal pur nécessaire à la fabrication de la zone de contacts électriques 117 et donc le coût total de fabrication dudit module.

Dans un ou plusieurs modes de réalisation de l'invention, le support diélectrique 116 peut être d'une superficie supérieure à la superficie de la zone de contacts électriques 117. Ainsi, comme représenté sur la figure 3B, la zone de contacts électriques 117 ne couvre qu'une partie de la surface du support diélectrique 116, offrant une bordure transparente 116a audit support. Cette bordure transparente 116a présente des dimensions qui peuvent varier en fonction des applications de la carte à puce, de l'esthétisme recherché, du premier motif imprimé 123, etc.

Dans un ou plusieurs modes de réalisation, la carte à puce comporte au moins un second motif divisé en deux parties : une première partie du second motif est contenue dans ou sur le module électronique 110 et une deuxième partie est imprimée sur le corps de carte 120. Un exemple d'un second motif est représenté par la référence 140 sur la figure 3B. Dans cet exemple, le second motif 140 est divisé en deux parties 141, 142 comprenant chacune une série de trois chiffres strictement identiques. L'homme du métier comprendra que le second motif peut être un dessin, un logo, une photographie, des données numériques, alphabétiques ou alphanumériques, ou tout autre image pouvant être scindée en deux parties complémentaires ou, au contraire, strictement identiques. Quelles soient complémentaires ou strictement identiques, ces deux parties 141, 142, une fois appariées, forment le second motif 140. Ainsi, l'appariement des deux parties 141, 142 constitue un élément de sécurité supplémentaire aux éléments de sécurité déjà existants et à celui décrit précédemment.

Dans un ou plusieurs modes de réalisation, la première partie du second motif, par exemple la partie 141 du second motif 140, est inscrite sur le support diélectrique 116 du module électronique, par un procédé de marquage connu tel que l'impression offset ou l'impression laser. L'inscription de cette première partie 141 est réalisée dans une portion transparente du support diélectrique 116. Elle peut, en particulier, être réalisée sur la bordure transparente 116a du support diélectrique. Dans une variante, l'inscription de la première partie peut être réalisée dans une des zones transparentes 117c, 117d de la zone de contacts électriques 117.

La deuxième partie du second motif, par exemple la partie 142, est imprimée sur le corps de carte 120, dans le proche voisinage de la zone de contacts électriques 117. Elle peut être, par exemple, imprimée au-dessus du premier motif 123 de sorte à pouvoir être visible par transparence à travers le support diélectrique. Les première et deuxième parties du second motif sont positionnées, respectivement sur le support diélectrique et sur le corps de carte, de sorte à être visuellement juxtaposées l'une à l'autre. Ainsi, vu de dessus, les première et deuxième parties du second motif ne forme qu'un seul et unique motif. Un contrôleur peut donc aisément voir à l'oeil nu si les deux parties du second motif sont identiques ou complémentaires. Si tel n'est pas le cas, alors il est probable que le module électronique ou le corps de carte ne soit pas d'origine et que la carte à puce soit falsifiée.

Les figures 4 et 5 représentent d'autres exemples de cartes à puce selon l'invention. La figure 4 représente un autre exemple de carte bancaire. La figure 5 représente un exemple de carte d'identité. Dans ces deux exemples, le module électronique 110 comporte un support diélectrique 116 sur lequel les première et deuxième parties 143, 144 du second motif sont positionnées respectivement au-dessus et au-dessous de la zone de contacts électriques 117 de sorte que, lorsqu'elles sont appariées, elles forment une image autour de ladite zone de contacts électriques. Dans l'exemple de la carte bancaire - figure 4 - l'une des parties du second motif est le logo, par exemple « VISA », déjà imprimé dans la zone 122 du corps de carte et l'autre partie du second motif est le numéro de carte bancaire déjà inscrit dans la zone 121 dudit corps de carte. Le doublement de ces données permet de contrôler que l'ensemble module électronique et corps de carte sont bien en concordance. Dans l'exemple de la carte d'identité - figure 5 - chacune des deux parties du second motif représente le logo « RF ». Cette similarité de la partie inscrite sur le support diélectrique et de la partie imprimée sur le corps de carte permet de contrôler que l'ensemble module électronique et corps de carte sont bien en concordance.

L'homme du métier comprend de ce qui précède que, quels que soient les modes de réalisation, la carte à puce selon l'invention constitue au moins un élément de sécurité supplémentaire du contrôle visuel des cartes à puce. L'invention offre, en effet, un élément de sécurité réparti sur deux éléments physiques distincts - le module électronique et le corps de carte. Ces deux éléments physiques doivent être correctement appariés pour que soit formé le premier motif et/ou le second motif.

Dans un ou plusieurs modes de réalisation, la première partie du second motif peut être mémorisée dans la puce du module électronique 110 de sorte qu'une lecture de la carte à puce permet de vérifier que cette première partie du second motif est bien en concordance avec la deuxième partie dudit second motif. De tels modes de réalisation offrent un niveau de sécurité supplémentaire, indépendant ou combinable avec le niveau de sécurité visuel décrit précédemment.

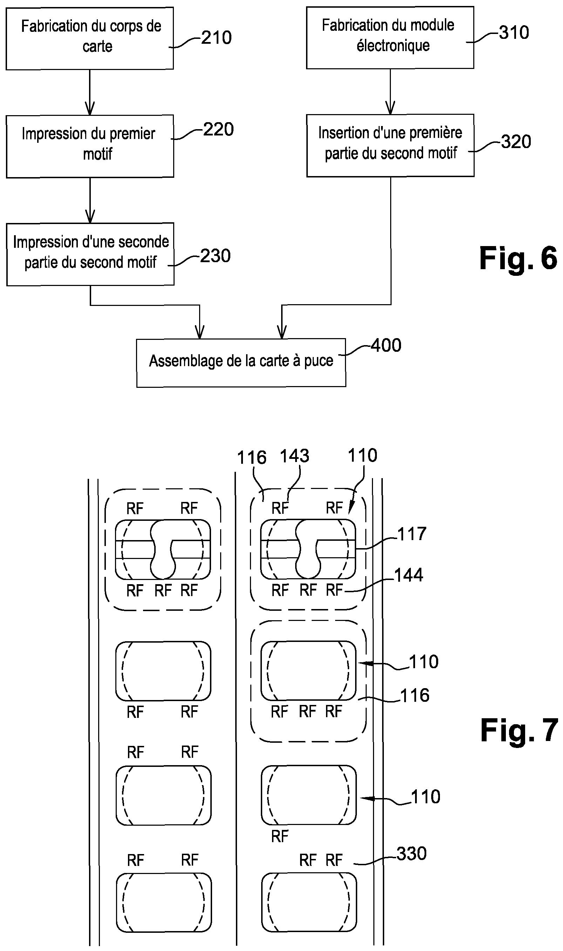

La carte à puce selon l'invention peut être fabriquée, comme représenté sur la figure 6, en mettant en oeuvre, d'une part, les opérations suivantes :
- fabrication du corps de carte 120 (étape 210),
- impression du premier motif sur le corps de carte (étape 220),
- impression - dans certains modes de réalisation - de la deuxième partie du second motif (étape 230),
   et, d'autre part, les opérations suivantes :
   - fabrication du module électronique 110 (étape 310),
   - insertion - dans certains modes de réalisation - de la première partie du second motif (étape 320).

Une opération d'assemblage (étape 400) du module électronique 110 dans le corps de carte 120 est ensuite effectuée pour obtenir la carte à puce. Un contrôle de la carte à puce est finalement réalisé pour vérifier si le module installé correspond bien au corps de carte.

Selon certains modes de réalisation, les modules électroniques 110 peuvent être fabriqués en bandes continues, comme représenté sur la figure 7. Chaque puce et chaque zone de contacts électriques 116 sont, respectivement, fixées et déposées sur une bande de matériau diélectrique 330. Le marquage de chaque second motif est effectué, selon le mode de réalisation, dans ou autour de chaque zone de contacts électriques. La bande de matériau diélectrique 330 est ensuite découpée de sorte à former les différents modules électroniques.

Dans certains modes de réalisation, chaque premier et/ou second motifs est unique. Dans d'autres modes de réalisation, un même motif peut être répété séquentiellement. Dans ce cas, une même première partie de second motif est inscrite sur le support diélectrique de tous les N modules électroniques de la bande.

Comme le comprend l'homme du métier, la fabrication du module électronique et la fabrication du corps de carte peuvent être indépendantes en termes de localisation et de temps (fabrication dans des usines différentes), mais dépendantes en termes de données et de motifs à insérer et imprimer. Un contrôle à la fin de l'opération d'assemblage permet de vérifier rapidement par simple visualisation des premier et/ou second motifs si le module est correctement implanté dans le corps de carte.

Bien que décrit à travers un certain nombre d'exemples, variantes et modes de réalisation, la carte à puce selon l'invention comprend divers variantes, modifications et perfectionnements qui apparaîtront de façon évidente à l'homme du métier, étant entendu que ces variantes, modifications et perfectionnements font partie de la portée de l'invention.

## Revendications

1. Carte à puce (100) comportant :
- un corps de carte (120) comportant une cavité et une face avant munie d'un premier motif imprimé (123), et
- un module électronique (110) logé dans la cavité du corps de carte et comportant un support diélectrique (116) équipé, sur une première face, d'une puce électronique et, sur une seconde face, d'une zone de contacts électriques (117), **caractérisée en ce que** le support diélectrique (116) est formé dans un matériau au moins partiellement transparent et recouvre en partie le premier motif imprimé (123) du corps de carte, de sorte qu'une partie dudit premier motif imprimé est visible par transparence à travers le support diélectrique.

2. Carte à puce selon la revendication 1, **caractérisée en ce que** le support diélectrique (116) présente une superficie supérieure à la superficie de la zone de contacts électriques (117) de sorte qu'une bordure transparente du support diélectrique recouvre une partie du premier motif imprimé.

3. Carte à puce selon la revendication 1 ou 2, **caractérisée en ce que** la seconde face du support diélectrique comporte, au sein de la zone de contacts électriques (117), des zones transparentes (117c, 117d) aptes à laisser le premier motif imprimé (123) apparaitre par transparence.

4. Carte à puce selon l'une quelconque des revendications 1 à 3, **caractérisée en ce qu'**elle comporte au moins un second motif (140) divisé en deux parties, une première partie (141, 143) étant contenue dans le module électronique (110), une deuxième partie (142, 144) étant imprimée sur le corps de carte (120).

5. Carte à puce selon la revendication 4, **caractérisée en ce que** le second motif (140) comporte une première et une deuxième parties strictement identiques ou une première et une deuxième parties complémentaires.

6. Carte à puce selon la revendication 4 ou 5, **caractérisée en ce que** la première partie (141, 143) du second motif (140) est inscrite sur le support diélectrique (116) de sorte que l'appariement du module électronique et du corps de carte forme ledit second motif.

7. Carte à puce selon l'une quelconque des revendications 4 à 6, **caractérisée en ce que** la première partie (141, 143) du second motif (140) est mémorisée dans la puce électronique, pour un contrôle par lecture de ladite carte à puce.

8. Carte à puce selon l'une quelconque des revendications 1 à 7, **caractérisée en ce que** le matériau dans lequel est formé le support diélectrique (116) est un matériau transparent ou translucide, sur une base Epoxy, PolyTéréphtalate d'Éthylène (PET), PolyNaphtalate d'Éthylène (PEN), Polyimide (PI) ou Polyétherimide (PEI).

9. Procédé de fabrication d'une carte à puce selon l'une quelconque des revendications 1 à 8, **caractérisé en ce qu'**il comporte une opération de fabrication du corps de carte (210), une opération de fabrication du module électronique (310) et une opération (400) d'assemblage du module électronique sur le corps de carte.

10. Procédé de fabrication selon la revendication 9, **caractérisé en ce que**, plusieurs modules électroniques (110) étant fabriqués en bande continue (330), la première partie (141, 143) du second motif (140) est inscrite sur le support diélectrique (116) de chaque module électronique avant découpe dudit module électronique.

11. Procédé de fabrication selon la revendication 10, **caractérisé en ce que** le second motif (140) est spécifique à chaque carte à puce.

12. Procédé de fabrication selon la revendication 10, **caractérisé en ce que** le second motif (140) est répétitif, la même première partie du second motif étant inscrite de façon répétitive sur tous les N modules électroniques de la bande, avec N ≠ 0.
